# FASCICULE DE BREVET EUROPEEN

(11) **EP 3 246 579 B1**
(45) Date de publication et mention de la délivrance du brevet: **20.10.2021**
(21) Numéro de dépôt: 17172023.8
(22) Date de dépôt: 19.05.2017
(51) Int. Cl.: F16B 5/02, B62D 65/14

(54) **ELEMENT DE FIXATION POUR UN BOITIER FONCTIONNEL, NOTAMMENT DE VEHICULE AUTOMOBILE**
BEFESTIGUNGSELEMENT FÜR EIN FUNKTIONSGEHÄUSE, INSBESONDERE EINES KRAFTFAHRZEUGS
ATTACHMENT ELEMENT FOR A FUNCTIONAL HOUSING, IN PARTICULAR OF A MOTOR VEHICLE

(30) Priorité: 20.05.2016 FR 1654517
(43) Date de publication de la demande: 22.11.2017
(73) Titulaire: Renault s.a.s, 92100 Boulogne-Billancourt (FR)
(72) Inventeur: OUATIK, Ali, 78990 ELANCOURT (FR)

(56) Documents cités:
- EP-A1- 2 009 298
- WO-A1-94/13506
- JP-A- 2005 186 721

## Description

L'invention concerne un élément de fixation pour un boîtier fonctionnel, notamment de véhicule automobile.

Les véhicules automobiles actuels comprennent de plus en plus de fonctionnalités nécessitant la présence de boîtiers fonctionnels, par exemple de type calculateur. Cependant, l'environnement du poste de conduite, derrière le tableau de bord est particulièrement restreint, de sorte qu'il peut s'avérer difficile d'implanter un boîtier présentant un encombrement non négligeable. Par ailleurs, ces boîtiers doivent être fixés rigidement afin de ne pas subir de vibrations ou mouvements susceptibles de les détériorer lors du déplacement du véhicule. Un élément de fixation selon l'art antérieur est divulgué par le document EP 2 009 298 A1.

Il existe donc un besoin pour réaliser une fixation d'un boîtier fonctionnel dans l'environnement restreint d'un poste de conduite.

L'invention vise à pallier ces inconvénients en proposant un élément de fixation d'un boîtier fonctionnel comprenant :
- une première plaque équipée de premiers moyens de fixation susceptibles d'être actionnés suivant une même direction prédéterminée de fixation,
- une deuxième plaque équipée de deuxièmes moyens de fixation, la deuxième plaque étant située au moins en partie en regard de la première plaque, à une distance prédéterminée de celle-ci,
- un élément de liaison reliant rigidement la première plaque à la deuxième plaque,
dans lequel les premiers moyens de fixation sont positionnés sur des parties de la première plaque qui ne sont pas en regard de la deuxième plaque suivant ladite direction prédéterminée de fixation.

Autrement dit, la deuxième plaque ne s'étend pas en regard des premiers moyens de fixation de la première plaque suivant ladite direction prédéterminée de fixation. Un tel agencement permet la manipulation des premiers moyens de fixation depuis le côté de la deuxième plaque quelles que soient les contraintes architecturales avoisinantes.

Avantageusement, l'élément de fixation selon la présente invention est constitué uniquement des première et deuxième plaques, de l'élément de liaison.

L'élément de fixation selon l'invention peut en outre présenter une ou plusieurs des caractéristiques suivantes :
- la deuxième plaque comporte, sur une face opposée à une face en regard de la première plaque, au moins un organe de positionnement pour un boîtier fonctionnel, permettant ainsi de positionner correctement ce dernier. De préférence au moins deux organes de positionnement sont prévus, par exemple deux. Avantageusement, cet organe de positionnement peut être en forme de bosse, facilement réalisable.
- La première plaque présente une dimension supérieure à la deuxième plaque suivant une direction prédéterminée et les premiers moyens de fixation sont positionnés aux extrémités de la première plaque suivant ladite direction.
- Les première et deuxième plaques sont parallèles ou sensiblement parallèles.

L'invention concerne également un organe fonctionnel de véhicule automobile comprenant un élément de fixation selon l'invention, ledit organe présentant une face comportant des plots de fixation sur lesquels est fixée la première plaque de l'élément de fixation, chaque plot de fixation présentant une face de fixation de forme prédéterminée, la première plaque de l'élément de fixation étant conformée pour que chaque partie comportant un premier moyen de fixation présente une forme complémentaire de la face de fixation d'un plot de fixation et coopère avec celle-ci. Il est ainsi possible d'utiliser des éléments de fixation existants pour fixer l'élément de fixation. En outre, de tels plots de fixation permettent d'assurer l'iso-statisme d'une pièce, l'élément de fixation est donc fixé rigidement et sans degrés de liberté.

La face de l'organe fonctionnel peut en outre comporter au moins une nervure à proximité des plots de fixation. Cela peut s'avérer particulièrement gênant pour implanter une pièce à proximité, notamment lorsque la nervure est de plus grandes dimensions que les plots de fixation. Avantageusement, la première plaque de l'élément de fixation peut alors présenter une forme telle qu'elle n'entre pas en contact avec ladite au moins une nervure lorsqu'elle est fixée aux plots de fixation. Autrement dit, la forme de la première plaque est choisie de manière à ne pas interférer avec la nervure. La deuxième plaque étant située à distance de la première plaque, sa forme est moins contrainte et peut ne dépendre que de la forme du boîtier fonctionnel qu'elle doit recevoir. Un tel agencement permet de fixer l'élément de fixation dans un environnement particulièrement restreint.

L'invention concerne enfin un véhicule automobile comprenant un élément de fixation selon l'invention et un boîtier fonctionnel fixé sur la deuxième plaque de l'élément de fixation.

Avantageusement, l'élément de fixation peut être fixé sur une face d'un organe fonctionnel du véhicule, ladite face comportant des plots de fixation sur lesquels est fixée la première plaque de l'élément de fixation, chaque plot de fixation présentant une face de fixation de forme prédéterminée, la première plaque de l'élément de fixation étant conformée pour que chaque partie comportant un premier moyen de fixation présente une forme complémentaire de la face de fixation d'un plot de fixation et coopère avec celle-ci.

En outre, la face de l'organe fonctionnel peut comporter au moins une nervure à proximité des plots de fixation. Il est alors avantageux que la première plaque de l'élément de fixation présente une forme telle qu'elle n'entre pas en contact avec ladite au moins une nervure lorsqu'elle est fixée aux plots de fixation.

L'organe fonctionnel mentionné précédemment est avantageusement un climatiseur, mais pourrait également être tout autre organe fonctionnel suffisamment grand et rigide pour servir de support à un boîtier fonctionnel prédéterminé, tel que la traverse métallique supportant la plupart des pièces de poste de conduite, notamment la planche de bord, la caisse assemblée.

Le boîtier de fonctionnel est par exemple un calculateur. Ce pourrait être aussi un corps de dispositif de radio, un chargeur de CD, un amplificateur audio ou tout autre boîtier fonctionnel.

L'invention est maintenant décrite en référence aux dessins annexés, non limitatifs, dans lesquels :
- la figure 1 est une vue partielle en perspective d'un organe fonctionnel, ici un climatiseur de véhicule automobile ;
- la figure 2 représente la même vue que la figure 1, un élément de fixation étant fixé sur l'organe fonctionnel ;
- la figure 3 représente la même vue que la figure 2, un boîtier fonctionnel étant fixé sur l'élément de fixation ;
- la figure 4 est une vue en perspective de l'élément de fixation visible figure 2 ;
- la figure 5 est une vue de dessus de l'élément de fixation représenté figure 4.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

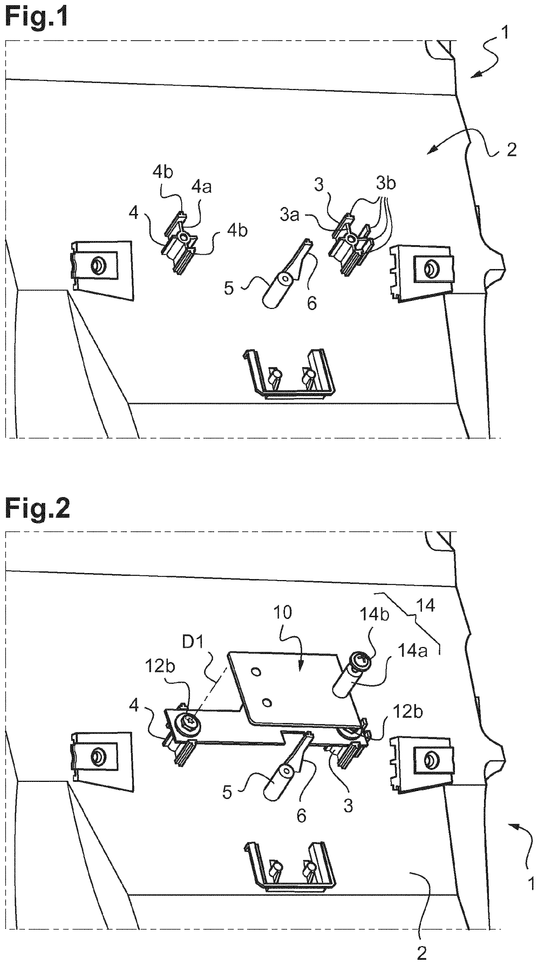

La figure 1 représente partiellement un organe fonctionnel 1 d'un véhicule automobile, ici un climatiseur, lequel fait habituellement partie du poste de conduite. Cet organe fonctionnel 1 comporte un boîtier ou carter lequel présente une face 2 comportant notamment des plots de fixation 3, 4, 5, ici au nombre de trois et une nervure 6. Deux des plots de fixation 3, 4 présentent chacun une face de fixation 3a, 4a respectivement de forme prédéterminée, délimitée ici par des doigts ou nervures 3b et 4b respectivement.

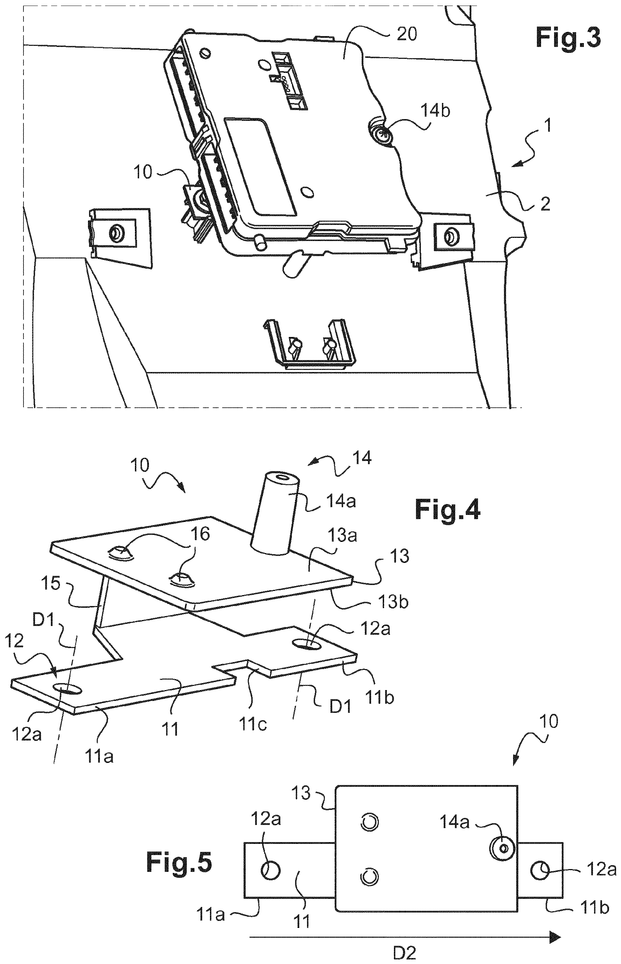

La figure 2 représente un élément de fixation 10 fixé sur la face 2 de l'organe fonctionnel 1 par les plots de fixation 3, 4. Cet élément de fixation 10 est décrit plus en détails en référence aux figures 4 et 5.

L'élément de fixation 10 représenté comprend :
- une première plaque 11 équipée de premiers moyens de fixation 12,
- une deuxième plaque 13 équipée de deuxièmes moyens de fixation 14, la deuxième plaque étant située à une distance prédéterminée de la première plaque,
- un élément de liaison 15 reliant rigidement la première plaque 11 à la deuxième plaque 13.

Les premiers moyens de fixation 12 sont susceptibles d'être actionnés suivant une même direction prédéterminée de fixation D1. Sur la figure 5, cette direction de fixation D1 est perpendiculaire au plan du dessin. Ces premiers moyens de fixation 12 comprennent ici deux orifices 12a, d'axe parallèle à l'axe D1 coopérant avec des éléments de fixation 12b (visibles figure 2) de type vis ou rivet ou similaire, ici des vis.

Les deuxièmes moyens de fixation 14 comprennent un plot 14a solidaire de la deuxième plaque 13 et coopérant avec un élément de fixation 14b de type vis ou rivet, ici une vis. Le plot 14a est ainsi situé sur une face 13a de la deuxième plaque 13 opposée à une face 13b en regard de la première plaque 11.

L'invention n'est nullement limitée par le nombre et la nature des premiers et deuxièmes moyens de fixation 12, 14, pourvu qu'ils permettent d'assurer d'une part la fixation de l'élément de fixation 10 à l'organe fonctionnel 1 et d'autre part la fixation de l'élément de fixation 10 à un boitier fonctionnel 20 représenté figure 3.

Selon l'invention, la deuxième plaque 13 est située à une distance prédéterminée de la première plaque et s'étend au moins en partie en regard de celle-ci suivant la direction de fixation D1 des premiers moyens de fixation 14 de la première plaque 11. En outre, les premiers moyens de fixation 12 sont positionnés sur des parties de la première plaque 11 qui ne sont pas en regard de la deuxième plaque 13 suivant la direction de fixation D1, tel que visible plus particulièrement sur les figures 2 et 5. Il est ainsi possible d'utiliser un outil pour actionner les premiers moyens de fixation depuis une zone de l'espace située du côté de la deuxième plaque 13.

Dans le mode de réalisation représenté, les première et deuxième plaques 11, 13 sont parallèles. L'élément de liaison 15 relient les deux plaques 11, 13 sur un de leur côté, tel que visible sur les figures 2-4. L'élément de fixation 10 présente ainsi un profil sensiblement en forme de U.

Les plaques 11, 13 présentent ainsi des formes différentes. La forme de la deuxième plaque 13 est ici rectangulaire et la première plaque 11 présente une forme générale de T. L'invention n'est toutefois pas limitée par une forme particulière des première et deuxième plaques pourvu qu'elles ne se superposent pas entièrement selon la direction D1 tel qu'expliqué plus haut. En particulier, ces formes seront choisies en fonction de l'architecture de l'environnement pour la première plaque 11 et en fonction du boîtier fonctionnel à fixer pour la deuxième plaque 13.

Avantageusement, tel que représenté, la première plaque 11 présente notamment une dimension supérieure à la deuxième plaque suivant une direction prédéterminée D2 (figure 5). Cette direction D2 est parallèle aux deux plaques 11, 13. On notera ainsi que les premiers moyens de fixation 12, plus précisément les orifices 12a sont positionnés aux extrémités 11a, 11b de la première plaque 11 suivant cette direction D2. La vue de dessus de l'élément de fixation 10 montre que ces premiers moyens de fixation 12 sont alors situés de part et d'autre de la deuxième plaque 13.

Outre les deuxièmes moyens de fixation 14, la deuxième plaque de fixation présente sur sa face 13a au moins un organe de positionnement 16. Dans l'exemple représenté deux organes de positionnement 16 en forme de bosse sont prévus. Ces organes de positionnement 16 vont participer au positionnement du boîtier fonctionnel 20 qui sera fixé sur l'élément de fixation 10. Ce boîtier fonctionnel 20 est représenté sur la figure 3. Il s'agit ici d'un calculateur dont une face repose sur la face 13a à laquelle il est solidarisé par la vis 14b coopérant avec le plot de fixation 14a.

L'élément de fixation 10 précédemment décrit est fixé aux plots de fixation 3 et 4 de l'organe fonctionnel 1. Ces derniers présentant des formes particulières, la première plaque 11 de l'élément de fixation est conformée pour que chaque partie comportant un premier moyen de fixation 12 présente une forme complémentaire de la face de fixation 3a, 4a d'un plot de fixation et coopère avec celle-ci. Ici, les extrémités 11a, 11b de la première plaque 11 sont de forme complémentaire aux faces de fixations 3a, 4a des plots de fixation 3, 4, comme on peut le voir figure 2. Ceci permet de bloquer tout mouvement de la première plaque 11 dans son plan. La fixation de la première plaque 11 est ensuite assurée au moyen des vis 12b traversant les orifices 12a de la première plaque et coopérant avec les plots de fixation 3, 4.

On notera enfin que l'un des bords de la première plaque 11 présente un évidement 11c permettant de laisser la nervure 6 passer sans contact entre la première plaque et la nervure 6 (figure 2). Tel que déjà expliqué, on comprend ainsi que la forme de la première plaque 11 est choisie en fonction de l'environnement, mais aussi en fonction des éléments servant à la fixer.

Bien entendu, l'invention n'est pas limitée non plus à un nombre d'éléments particuliers présents sur la face 2 de l'organe fonctionnel recevant l'élément de fixation 10, ce dernier pouvant être adapté à un grand nombre de type d'environnements.

De manière générale, l'élément de fixation 10 peut être réalisé en matériau métallique ou polymère, en une ou plusieurs pièces mais de préférence en une seule pièce.

La distance séparant les deux plaques de l'élément de fixation 10 pourra être déterminée en fonction de l'espace disponible et des éléments environnants.

L'élément de fixation selon l'invention permet ainsi la fixation d'un boîtier fonctionnel dans un environnement restreint et contraint par la présence d'éléments en saillie sur la face de l'organe fonctionnel devant recevoir le boîtier fonctionnel. L'élément de fixation permet ainsi de déporter le boîtier fonctionnel de la face de l'organe fonctionnel et d'éviter ces éléments en saillie, tout en restant compact de part son profil en U. Il présente en outre l'avantage d'être résistant et facile à réaliser.

## Revendications

1. Elément de fixation (10) d'un boîtier fonctionnel (20) comprenant :
- une première plaque (11) équipée de premiers moyens de fixation (12) susceptibles d'être actionnés suivant une même direction prédéterminée de fixation (D1),
- une deuxième plaque (13) équipée de deuxièmes moyens de fixation (14), la deuxième plaque étant située à une distance prédéterminée de la première plaque et s'étendant au moins en partie en regard de celle-ci suivant ladite direction prédéterminée de fixation (D1),
- un élément de liaison (15) reliant rigidement la première plaque (11) à la deuxième plaque (13),
dans lequel les premiers moyens de fixation (12) sont positionnés sur des parties (11a, 11b) de la première plaque (11) qui ne sont pas en regard de la deuxième plaque (13) suivant ladite direction prédéterminée de fixation (D1).

2. Elément de fixation (10) selon la revendication 1, **caractérisé en ce que** la deuxième plaque (13) comporte, sur une face (13a) opposée à une face (13b) en regard de la première plaque (11), au moins un organe de positionnement (16) pour un boîtier fonctionnel.

3. Elément de fixation (10) selon la revendication 2, **caractérisé en ce qu'**au moins un organe de positionnement (16) est en forme de bosse.

4. Elément de fixation (10) selon l'une quelconque des revendications 1 à 3, **caractérisé en ce que** la première plaque (11) présente une dimension supérieure à la deuxième plaque (13) suivant une direction prédéterminée (D2) et **en ce que** les premiers moyens de fixation (12) sont positionnés aux extrémités (11a, 11b) de la première plaque (11) suivant ladite direction (D2).

5. Elément de fixation (10) selon l'une quelconque des revendications 1 à 4, **caractérisé en ce que** les première et deuxième plaques (11, 13) sont parallèles ou sensiblement parallèles.

6. Organe fonctionnel (1) de véhicule automobile comprenant un élément de fixation (10) selon l'une quelconque des revendications 1 à 5, ledit organe fonctionnel présentant une face 2 comportant des plots de fixation (3, 4) sur lesquels est fixée la première plaque (11) de l'élément de fixation (10), chaque plot de fixation (3, 4) présentant une face de fixation (3a, 4a) de forme prédéterminée, la première plaque (11) de l'élément de fixation étant conformée pour que chaque partie (11a, 11b) comportant un premier moyen de fixation (12) présente une forme complémentaire de la face de fixation (3a, 4a) d'un plot de fixation (3, 4) et coopère avec celle-ci.

7. Organe fonctionnel (1) de véhicule automobile selon la revendication 6, dans lequel la face (2) de l'organe fonctionnel comporte en outre au moins une nervure (6) à proximité des plots de fixation (3, 4), et dans lequel la première plaque (11) de l'élément de fixation présente une forme telle qu'elle n'entre pas en contact avec ladite au moins une nervure (6) lorsqu'elle est fixée aux plots de fixation.

8. Véhicule automobile comprenant un élément de fixation (10) selon l'une quelconque des revendications 1 à 5 et un boîtier fonctionnel (20) fixé sur la deuxième plaque de l'élément de fixation.

9. Véhicule automobile selon la revendication 8, dans lequel l'élément de fixation (10) est fixé sur une face (2) d'un organe fonctionnel du véhicule, ladite face comportant des plots de fixation (3, 4) sur lesquels est fixée la première plaque (11) de l'élément de fixation (10), chaque plot de fixation (3, 4) présentant une face de fixation (3a, 4a) de forme prédéterminée, la première plaque (11) de l'élément de fixation étant conformée pour que chaque partie (11a, 11b) comportant un premier moyen de fixation (12) présente une forme complémentaire de la face de fixation (3a, 4a) d'un plot de fixation (3, 4) et coopère avec celle-ci.

10. Véhicule automobile selon la revendication 9, dans lequel la face (2) de l'organe fonctionnel comporte en outre au moins une nervure (6) à proximité des plots de fixation (3, 4), et dans lequel la première plaque (11) de l'élément de fixation présente une forme telle qu'elle n'entre pas en contact avec ladite au moins une nervure (6) lorsqu'elle est fixée aux plots de fixation.

## Patentansprüche

1. Befestigungselement (10) eines Funktionsgehäuses (20), umfassend:
- eine erste Platte (11), die mit ersten Befestigungsmitteln (12) versehen ist, die in derselben vorbestimmten Befestigungsrichtung (D1) betätigt werden können,
- eine zweite Platte (13), die mit zweiten Befestigungsmitteln (14) versehen ist, wobei die zweite Platte in einem vorbestimmten Abstand von der ersten Platte angeordnet ist und sich mindestens teilweise dieser gegenüber in der vorbestimmten Befestigungsrichtung (D1) erstreckt,
- ein Verbindungselement (15), das die erste Platte (11) und die zweite Platte (13) starr verbindet, wobei die ersten Befestigungsmittel (12) auf Teilen (11a, 11b) der ersten Platte (11) positioniert sind, die der zweiten Platte (13) nicht in der vorbestimmten Befestigungsrichtung (D1) gegenüberliegen.

2. Befestigungselement (10) nach Anspruch 1, **dadurch gekennzeichnet, dass** die zweite Platte (13) an einer Fläche (13a), die einer Fläche (13b) gegenüber der ersten Platte (11) entgegengesetzt ist, mindestens ein Positionierungsglied (16) für ein Funktionsgehäuse aufweist.

3. Befestigungselement (10) nach Anspruch 2, **dadurch gekennzeichnet, dass** mindestens ein Positionierungsglied (16) buckelförmig ist.

4. Befestigungselement (10) nach einem der Ansprüche 1 bis 3, **dadurch gekennzeichnet, dass** die erste Platte (11) in einer vorbestimmten Richtung (D2) eine größere Abmessung als die zweite Platte (13) aufweist und dass die ersten Befestigungsmittel (12) in der Richtung (D2) an den Enden (11a, 11b) der ersten Platte (11) positioniert sind.

5. Befestigungselement (10) nach einem der Ansprüche 1 bis 4, **dadurch gekennzeichnet, dass** die erste und die zweite Platte (11, 13) parallel oder im Wesentlichen parallel sind.

6. Kraftfahrzeugfunktionsglied (1), umfassend ein Befestigungselement (10) nach einem der Ansprüche 1 bis 5, wobei das Funktionsglied eine Fläche (2) aufweist, die Befestigungsnocken (3, 4) aufweist, an denen die erste Platte (11) des Befestigungselements (10) befestigt ist, wobei jeder Befestigungsnocken (3, 4) eine Befestigungsfläche (3a, 4a) mit vorbestimmter Form aufweist, wobei die erste Platte (11) des Befestigungselements dazu ausgestaltet ist, dass jeder ein erstes Befestigungsmittel (12) aufweisender Teil (11a, 11b) eine zu der Befestigungsfläche (3a, 4a) eines Befestigungsnockens (3, 4) komplementäre Form aufweist und mit dieser zusammenwirkt.

7. Kraftfahrzeugfunktionsglied (1) nach Anspruch 6, wobei die Fläche (2) des Funktionsglieds ferner mindestens eine Rippe (6) in der Nähe der Befestigungsnocken (3, 4) aufweist und wobei die erste Platte (11) des Befestigungselements eine solche Form aufweist, dass sie nicht mit der mindestens einen Rippe (6) in Kontakt kommt, wenn sie an den Befestigungsnocken befestigt wird.

8. Kraftfahrzeug, umfassend ein Befestigungselement (10) nach einem der Ansprüche 1 bis 5 und ein an der zweiten Platte des Befestigungselements befestigtes Funktionsgehäuse (20).

9. Kraftfahrzeug nach Anspruch 8, wobei das Befestigungselement (10) an einer Fläche (2) eines Funktionsglieds des Fahrzeugs befestigt ist, wobei die Fläche Befestigungsnocken (3, 4) aufweist, an denen die erste Platte (11) des Befestigungselements (10) befestigt ist, wobei jeder Befestigungsnocken (3, 4) eine Befestigungsfläche (3a, 4a) mit vorbestimmter Form aufweist, wobei die erste Platte (11) des Befestigungselements dazu ausgestaltet ist, dass jeder ein erstes Befestigungsmittel (12) aufweisender Teil (11a, 11b) eine zu der Befestigungsfläche (3a, 4a) eines Befestigungsnockens (3, 4) komplementäre Form aufweist und mit dieser zusammenwirkt.

10. Kraftfahrzeug nach Anspruch 9, wobei die Fläche (2) des Funktionsglieds ferner mindestens eine Rippe (6) in der Nähe der Befestigungsnocken (3, 4) aufweist und wobei die erste Platte (11) des Befestigungselements eine solche Form aufweist, dass sie nicht mit der mindestens einen Rippe (6) in Kontakt kommt, wenn sie an den Befestigungsnocken befestigt wird.

## Claims

1. Attachment element (10) for attaching a functional housing (20) comprising:
- a first plate (11) equipped with first attachment means (12) capable of being actuated in the one same predetermined attachment direction (D1),
- a second plate (13) equipped with second attachment means (14), the second plate being situated at a predetermined distance from the first plate and extending at least partially opposite the first plate in said predetermined direction of attachment (D1),
- a connecting element (15) rigidly connecting the first plate (11) to the second plate (13),
wherein the first attachment means (12) are positioned on parts (11a, 11b) of the first plate (11) that do not face the second plate (13) in said predetermined direction of attachment (D1).

2. Attachment element (10) according to Claim 1, **characterized in that** the second plate (13) comprises, on an opposite face (13a) to a face (13b) facing the first plate (11), at least one positioning member (16) for a functional housing.

3. Attachment element (10) according to Claim 2, **characterized in that** at least one positioning member (16) is in the form of a bump.

4. Attachment element (10) according to any one of Claims 1 to 3, **characterized in that** the first plate (11) has a dimension greater than the second plate (13) in a predetermined direction (D2), and **in that** the first attachment means (12) are positioned at the extremities (11a, 11b) of the first plate (11) in said direction (D2).

5. Attachment element (10) according to any one of Claims 1 to 4, **characterized in that** the first and second plates (11, 13) are parallel or substantially parallel.

6. Functional member (1) of a motor vehicle, comprising an attachment element (10) according to any one of Claims 1 to 5, said functional member having a face (2) comprising attachment posts (3, 4) to which the first plate (11) of the attachment element (10) is attached, each attachment post (3, 4) having an attachment face (3a, 4a) of predetermined shape, the first plate (11) of the attachment element being shaped so that each part (11a, 11b) comprising a first attachment means (12) has a shape that complements the attachment face (3a, 4a) of an attachment post (3, 4) and collaborates therewith.

7. Functional member (1) of a motor vehicle according to Claim 6, wherein the face (2) of the functional member further comprises at least one rib (6) in the vicinity of the attachment posts (3, 4), and wherein the first plate (11) of the attachment element has a shape such that it does not come into contact with said at least one rib (6) when it is attached to the attachment posts.

8. Motor vehicle comprising an attachment element (10) according to any one of Claims 1 to 5 and a functional housing (20) attached to the second plate of the attachment element.

9. Motor vehicle according to Claim 8, wherein the attachment element (10) is attached to a face (2) of a functional member of the vehicle, said face comprising attachment posts (3, 4) to which the first plate (11) of the attachment element (10) is attached, each attachment post (3, 4) having an attachment face (3a, 4a) of predetermined shape, the first plate (11) of the attachment element being shaped so that each part (11a, 11b) comprising a first attachment means (12) has a shape that complements the attachment face (3a, 4a) of an attachment post (3, 4) and collaborates therewith.

10. Motor vehicle according to Claim 9, wherein the face (2) of the functional member further comprises at least one rib (6) in the vicinity of the attachment posts (3, 4), and wherein the first plate (11) of the attachment element has a shape such that it does not come into contact with said at least one rib (6) when it is attached to the attachment posts.
